# EUROPEAN PATENT SPECIFICATION

(11) **EP 3 348 702 B1**
(45) Date of publication and mention of the grant of the patent: **16.03.2022**
(21) Application number: 18150367.3
(22) Date of filing: 04.01.2018
(51) Int. Cl.: D06F 39/08, F16K 15/00, F16K 27/02, A47L 15/42

(54) **IMPROVED WATER DRAINAGE PIPE FOR WASHING MACHINES SUCH AS DISHWASHERS AND LAUNDRY MACHINES**
VERBESSERTER WASSERABLAUFSCHLAUCH FÜR WASCHMASCHINEN WIE ZUM BEISPIEL GESCHIRRSPÜLMASCHINEN UND WASCHMASCHINEN
TUYAU DE DRAINAGE D'EAU AMÉLIORÉ POUR MACHINES A LAVER TELLES QUE DES LAVE-VAISSELLE ET DES LAVE-LINGE

(30) Priority: 17.01.2017 IT 201700004550
(43) Date of publication of application: 18.07.2018
(73) Proprietor: TP Reflex Group S.p.A., 21040 Venegono Superiore (VA) (IT)
(72) Inventor: BRUSA, Alberto, 21040 Venegono Superiore (VA) (IT); MACCHI, Claudio, 21040 Venegono Superiore (VA) (IT); ROTTA, Andrea, 21040 Venegono Superiore (VA) (IT)
(74) Representative: Rastelli, Franco

(56) References cited:
- EP-A1- 2 886 035
- DE-A1-102012 216 864

## Description

### BACKGROUND OF THE INVENTION

The present invention relates to an improved water drainage pipe for washing machines such as dishwashers and laundry machines.

The field of the invention is that of the pipes used for draining the water from washing machines, in which the water is drained by means of a pump.

In these applications, the need is felt to prevent the pump from being damaged due to phenomena of cavitation, caused by the water column which is in the low pressure drainage length of the pipe.

To overcome this problem, it is known to create, in the low pressure length of the water drainage pipe, an opening that temporarily places the pipe in communication with the outside, so as to take the inside of the pipe to atmospheric pressure and thereby avoid the occurrence of undesirable low pressures.

For this purpose valves are used, fitted directly on the wall of the drainage pipe and at its opening towards the outside. In this way water is prevented from flowing through the same opening in normal conditions or conditions of compression of the pipe, while allowing the air to access the inside of the same pipe if low pressure lengths are formed.

Currently, drainage pipes of the aforesaid type are known, which have a pipe length interposed between the respective water intake and drainage portions, in which the aforesaid pipe length has a control valve of the described inlet opening for the air entering the pipe. Non-limiting examples of known valves suitable for these purposes are umbrella valves, duck beak valves and ball valves.

The function of the valve is thus to allow the air to access the inside of the pipe in presence of a length in low pressure condition, while the same valve prevents the water from exiting outwards in normal working condition of the drainage pipe.

EP2886035A1 **discloses an outlet tube for dish and linen washing machines comprising a housing recess for an umbrella valve, of a silicone material, including a projecting lug engaged in a hole formed in a portion of a valve support element.**

In the applications described above, the need is felt to simplify the structure of the pipe and the processing required for manufacturing it, while increasing the reliability of the pipe itself during use, both in normal operating water draining conditions, and when a low pressure condition occurs inside.

### SUMMARY OF THE INVENTION

It is thus a main object of the present invention to provide a water drainage pipe for washing machines, which is able to avoid the formation of low pressure conditions in the length downstream of the pump, while having a simpler structure, which is easier to make and is yet even more reliable than the known ones.

These and other objects are achieved by the device of claim 1.

Preferred embodiments of the invention are disclosed in the remaining claims.

In comparison with the prior art pipes, the pipe of the invention offers the advantage that, although its structure is simpler, easier to make and less expensive, it is even more reliable than the known ones with umbrella, duck beak, or ball valves, for example.

### BRIEF DESCRIPTION OF THE DRAWINGS

These and other objects, advantages and characteristics are disclosed in the description below of some preferred embodiments of the pipe of the invention shown, by the way of non-limiting examples, in the figures of the accompanying drawings, wherein:
Figure 1 shows a perspective view of an example of a pipe which is not part of the claimed invention;
Figure 2 shows an exploded view of the pipe in Figure 1;

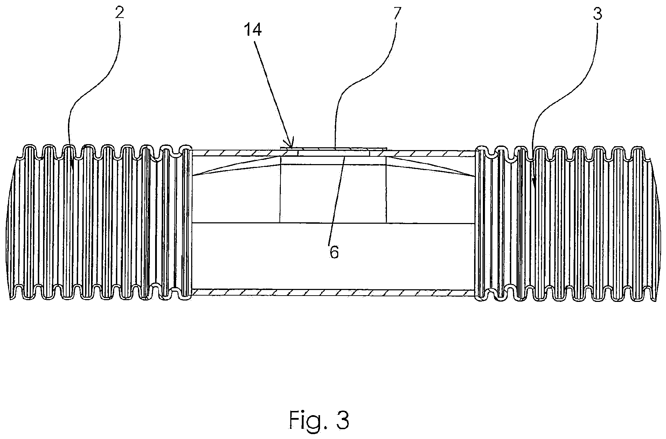

Figure 3 shows the pipe in Figure 1 taken along section A-A;
Figures 4, 5 and 6 show a first embodiment of the pipe of the claimed invention;
Figures 7, 8 and 9 show a second embodiment of the pipe of the claimed invention; and
Figure 10 shows an example of application of the pipe in the preceding Figures.

### DESCRIPTION OF THE PREFERRED EMBODIMENTS

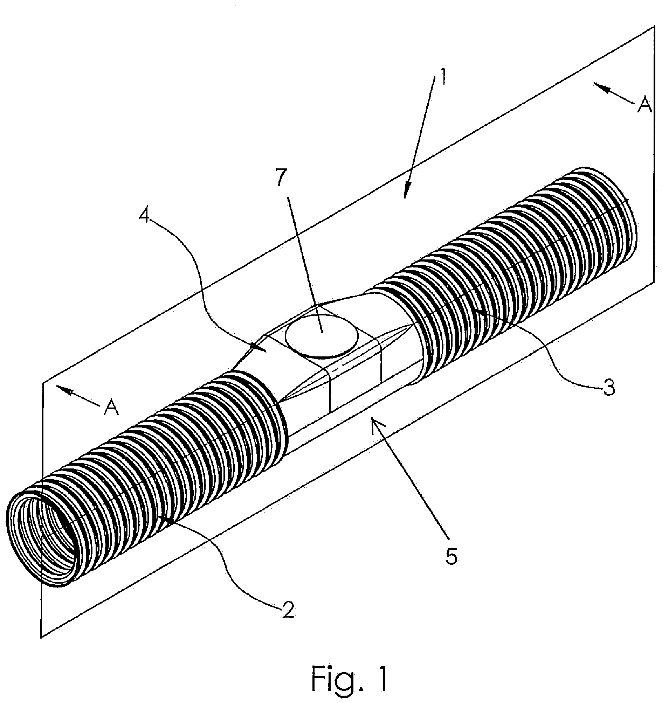

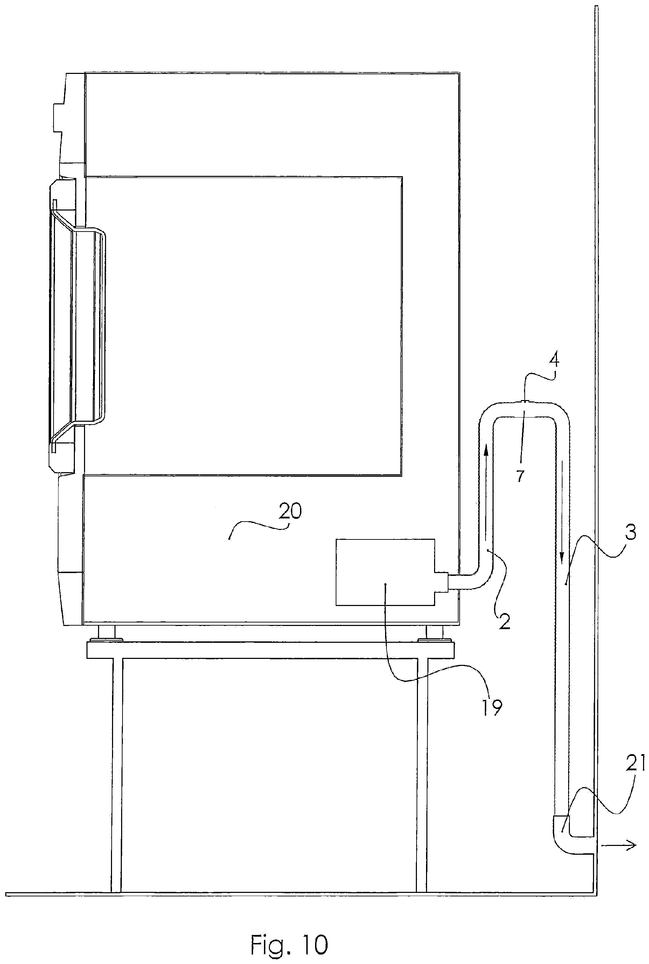

The pipe 1 shown in Figure 1 comprises a length 2 for the connection to the drainage pump 19 of the washing machine 20 (Figure 10), a length 3 for drainage of the water to the outside and a length 5 bearing a valve body 4 interposed between the aforesaid lengths 2 and 3 of the same pipe 1.

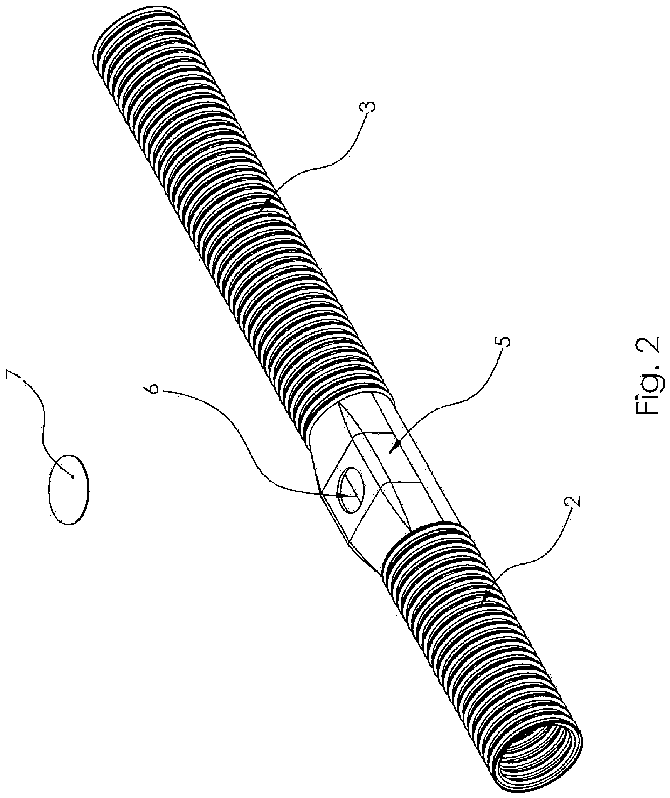

As shown in greater detail in Figure 2, the aforesaid valve body 4 of the pipe length 5 is provided with an opening 6 which, according to the invention, is closed by a breathable membrane 7.

Semi-permeable membranes, i.e. permeable to gases and impermeable to liquids, are preferred for the invention. By way of non-limiting example, membranes suitable for the invention are the membranes better known on the market as "protective vents" or "adhesive vents".

The peculiarity of this membrane is to allow the air flow in both directions through the opening 6, while preventing at the same time the water from passing towards the outside of the tube length 5.

For example, the membrane 7 may be fixed to the tube length 5 so as to close the aforesaid opening 6 either by gluing or by welding the peripheral lower edge 14 of the membrane itself directly over the tube length 5 and on the corresponding edge of its opening 6 (Figure 2).

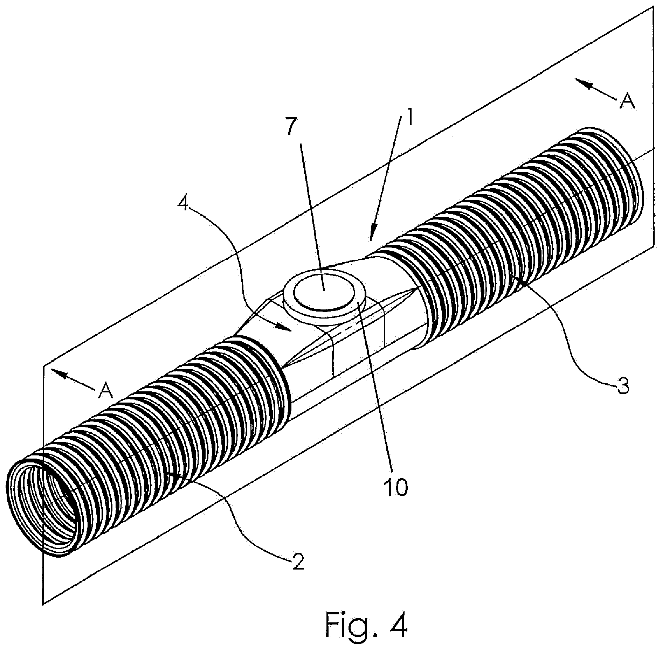

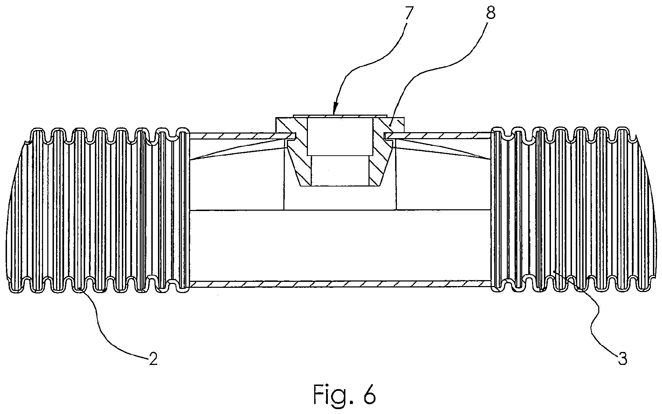

In the first embodiment of the pipe according to the invention shown in Figures 4 to 6, the membrane 7 is applied over the opening 6 of the tube length 5, after interposing a connection element 8, which has an axial hole 12, a portion 9 for coupling to the inside of the opening 6 and a collar 10 for coupling, either by gluing, welding or other, to the membrane 7.

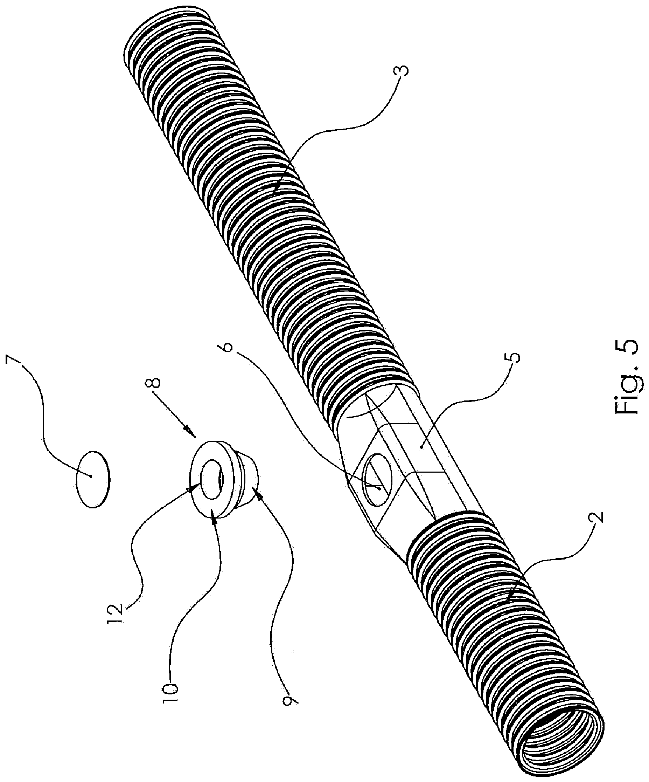

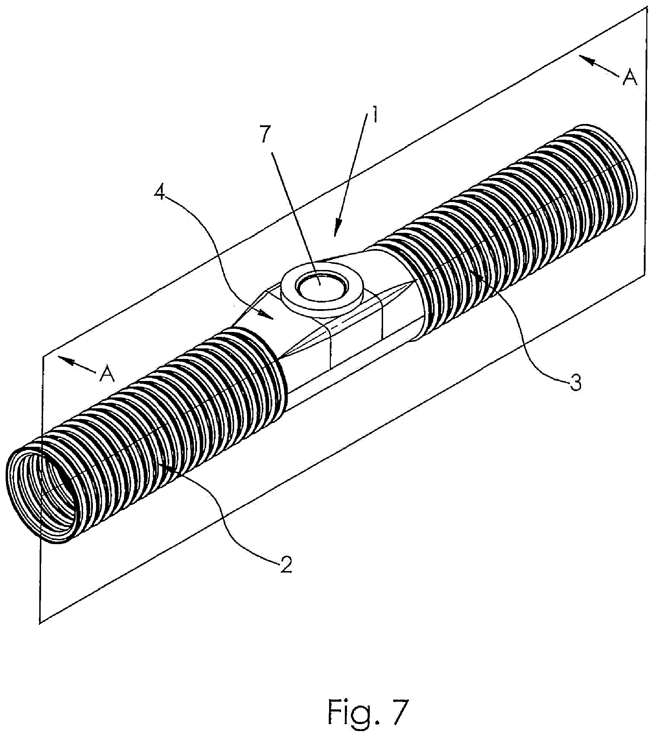

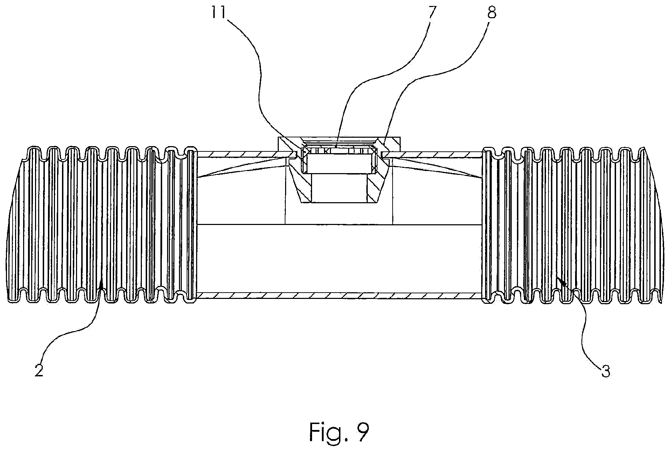

In the second embodiment of the pipe according to the invention shown in Figures 7 to 9, the pipe of Figure 5 is integrated with a support 11, adapted, on one side, to couple by fitting in the axial hole 12 of the connection element 8 and, on the other side, to support the membrane 7, made integral with the connection element 8 itself, by gluing, welding or other.

The surface of the support 11 bearing the membrane 7 is provided with a plurality of peripheral holes 13, which have the function of ensuring the necessary air permeability of such support 11.

In use, the length 2 of the pipe of the invention is connected to the water drainage pump 19 of the washing machine 20, which is a laundry machine in the example shown in Figure 10. Instead, the length 3 of the pipe of the invention is connected to the drain 21 draining the water towards the outside.

In presence of a low pressure condition in the aforesaid length 3 of the pipe 1, the outside air is drawn inside the pipe by passing through the breathable membrane 7 of the valve body 4.

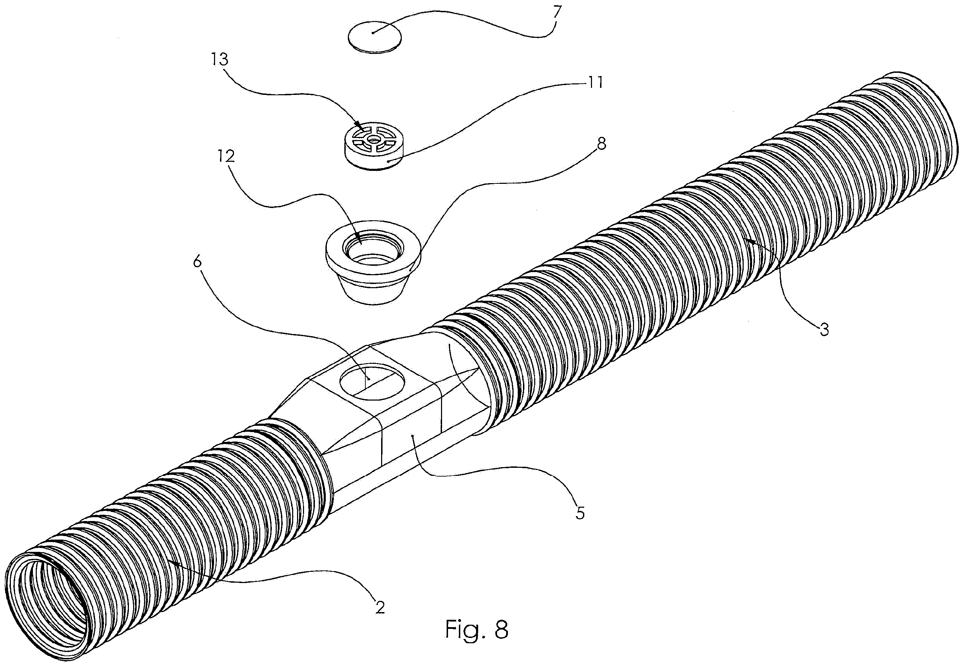

In the variant shown in figure 8, the air also passes through the peripheral holes 13 of the support 11. In this way, the air drawn from the outside enters through the hole 6 of the valve body 4 into the pipe 1, balancing its internal pressure with the external atmospheric pressure, thereby avoiding undesired cavitation phenomena on the pump 19 of the machine 20.

## Claims

1. A water drainage pipe (1) for washing machines, in particular dishwashers and laundry machines, comprising a length (2) for the connection of said pipe (1) to a pump (19) of a washing machine (20), a length (3) for water drainage towards the outside and a pipe length (5) provided with a valve body (4) bearing an opening (6), said valve body (4) being provided with a breathable membrane (7) closing said opening (6); said water drainage pipe being **characterised in that** said membrane (7) is provided with a peripheral edge (14) fixed either by gluing or by welding to a connection element (8) interposed between said membrane (7) and said pipe length (5).

2. A pipe according to claim 1, **characterised in that** said valve body (4) comprises said connection element (8) having an axial hole (12), a collar (10) for the coupling to said membrane (7) and a portion (9) for the coupling of the element (8) itself at said opening (6) of said pipe length (5) of said valve body (4).

3. A pipe according to claim 2, **characterised in that** it further comprises a support (11) fixing said membrane (7) to said connection element (8), said support (11) being provided with peripheral air passage holes (13).

## Patentansprüche

1. Wasserablaufschlauch (1) für Waschmaschinen, insbesondere Geschirrspülmaschinen und Waschmaschinen, der eine Länge (2) für die Verbindung des Schlauchs (1) mit einer Pumpe (19) einer Waschmaschine (20), eine Länge (3) für Wasserablauf zur Außenseite und eine Schlauchlänge (5) umfasst, die mit einem Ventilkörper (4), welcher eine Öffnung (6) trägt, versehen ist, wobei der Ventilkörper (4) mit einer atmungsaktiven Membran (7) versehen ist, die die Öffnung (6) schließt; wobei der Wasserablaufschlauch **dadurch gekennzeichnet ist, dass** die Membran (7) mit einer Umfangskante (14) versehen ist, die entweder durch Kleben oder Schweißen an einem Verbindungselement (8) befestigt ist, welches zwischen der Membran (7) und der Schlauchlänge (5) eingelegt ist.

2. Schlauch nach Anspruch 1, **dadurch gekennzeichnet, dass** der Ventilkörper (4) das Verbindungselement (8) mit einem axialen Loch (12), einem Kragen (10) zum Ankuppeln an die Membran (7) und einem Abschnitt (9) zum Ankuppeln des Elements (8) selbst an die Öffnung (6) der Schlauchlänge (5) des Ventilkörpers (4) umfasst.

3. Schlauch nach Anspruch 2, **dadurch gekennzeichnet, dass** er ferner eine Stütze (11) umfasst, die die Membran (7) am Verbindungselement (8) befestigt, wobei die Stütze (11) mit umfänglichen Luftdurchgangslöchern (13) versehen ist.

## Revendications

1. Tuyau de drainage d'eau (1) pour machine à laver, en particulier lave-vaisselle et lave-linge, comprenant une longueur (2) pour la connexion dudit tuyau (1) à une pompe (19) d'une machine à laver (20), une longueur (3) pour le drainage d'eau vers l'extérieur et une longueur de tuyau (5) pourvue d'un corps de vanne (4) comportant une ouverture (6) ledit corps de vanne (4) étant pourvu d'une membrane respirante (7) fermant ladite ouverture (6) ; ledit tuyau de drainage d'eau étant **caractérisé en ce que** ladite membrane (7) est pourvue d'un bord périphérique (14) fixé soit par collage, soit par soudage à un élément de connexion (8) interposé entre ladite membrane (7) et ladite longueur de tuyau (5).

2. Tuyau selon la revendication 1, **caractérisé en ce que** ledit corps de vanne (4) comprend ledit élément de connexion (8) doté d'un trou axial (12), une collerette (10) pour le couplage à ladite membrane (7) et une section (9) pour le couplage de l'élément (8) lui-même au niveau de ladite ouverture (6) de ladite longueur de tuyau (5) dudit corps de vanne (4).

3. Tuyau selon la revendication 2, **caractérisé en ce qu'**il comprend en outre un support (11) fixant ladite membrane (7) audit élément de connexion (8), ledit support (11) étant pourvu de trous périphériques de passage d'air (13) .
